# EUROPÄISCHE PATENTSCHRIFT

(11) **EP 2 408 225 B1**
(45) Veröffentlichungstag und Bekanntmachung des Hinweises auf die Patenterteilung: **03.07.2013**
(21) Anmeldenummer: 10007234.7
(22) Anmeldetag: 13.07.2010
(51) Int. Cl.: H04W 16/18, H04W 16/14

(54) **Verfahren zur Planung eines Automatisierungsnetzwerks**
Method for planning an automation network
Procédé de planification d'un réseau d'automatisation

(43) Veröffentlichungstag der Anmeldung: 18.01.2012
(73) Patentinhaber: Siemens Aktiengesellschaft, 80333 München (DE)
(72) Erfinder: Grebner, Jens, 90489 Nürnberg (DE); Kunz, Martin, 90459 Nürnberg (DE); Talanis, Thomas, 91336 Heroldsbach (DE); Volkmann, Frank, 90475 Nürnberg (DE)

(56) Entgegenhaltungen:
- EP-A1- 0 878 976
- GB-A- 2 313 264
- YÜCEK T ET AL: "A survey of spectrum sensing algorithms for cognitive radio applications", IEEE COMMUNICATIONS SURVEYS, IEEE, NEW YORK, NY, US, Bd. 11, Nr. 1, 1. Januar 2009 (2009-01-01) , Seiten 116-130, XP011252849, ISSN: 1553-877X

## Beschreibung

Die Erfindung betrifft ein Verfahren und einen Computer zur Planung eines industriellen Automatisierungsnetzwerks, ein Automatisierungsnetzwerk und ein computerlesbares Speichermedium. Ein Verfahren und Vorrichtung zur Auswahl von Frequenzwiederholungen in zellularen Kommunikationssytemen ist beispielsweise aus EP 0 878 976 A1 bekannt.

In "A survey of spectrum sensing algorithms for cognitive radio applications", IEEE Communications Surveys, Bd. 11, Nr. 1, 01.01.2009, Seite 116-130, ISSN 1553-877X ist ein Kommunikationssystem mit einem ersten drahtlosen Kommunikationsnetzwerk und einem zweiten drahtlosen Kommunikationsnetzwerk beschrieben, bei dem die räumliche Funkabdeckung des ersten und die räumliche Funkabdeckung des zweiten drahtlosen Kommunikationsnetzwerks zumindest teilweise überlappen. Das erste drahtlose Kommunikationsnetzwerk überträgt in einem Teilbereich eines ersten Frequenzbereichs Daten, während das zweite drahtlose Kommunikationsnetzwerk in einem Teilbereich eines zweiten Frequenzbereichs Daten überträgt. Dabei überlappen sich der erste und der zweite Frequenzbereich teilweise.

Aus GB 2 313 264 A ist ein Verfahren zum Zuweisen von Funkkanälen an Funksendeempfänger bekannt, bei dem Fuzzy-Logik verwendet wird, um die Übertragungsqualität zu bewerten und einen optimalen Kanalzuteilungsplan zu ermitteln. Dabei wird eine Vielzahl an Kanalzuteilungsplänen erzeugt, die eine zufällige Zuordnung von Funkkanälen zu Funksendeempfängern aufweisen. Für jeden dieser Kanalzuteilungspläne wird zur Bewertung ein Gütevektor ermittelt. In Abhängigkeit von den ermittelten Gütevektoren wird ein Kanalzuteilungsplan zur Anwendung ausgewählt.

Ein Automatisierungsnetzwerk kann z.B. drahtgebundene Kommunikationskomponenten und/oder drahtlose Kommunikationskomponenten umfassen. Ein Automatisierungsnetzwerk umfasst zumindest eine Automatisierungseinrichtung. Eine Automatisierungseinrichtung kann beispielsweise ein Computer, PC und/oder Controller mit Steuerungs-Aufgaben bzw. Steuerungs-Fähigkeiten sein. Insbesondere kann eine Automatisierungseinrichtung beispielsweise eine industrielle Automatisierungseinrichtung sein, die z.B. speziell zur Steuerung und/oder Regelung industrieller Anlagen ausgebildet, eingerichtet und/oder vorgesehen sein kann. Insbesondere können solche Automatisierungzeinrichtungen bzw. industriellen Automatisierungseinrichtungen echtzeitfähig sein, d.h. eine Steuerung bzw. Regelung in Echtzeit ermöglichen. Dazu kann die Automatisierungseinrichtung bzw. die industrielle Automatisierungseinrichtung z.B. ein Echtzeitbetriebssystem umfassen und/oder zumindest unter anderem ein echtzeitfähiges Kommunikationsprotokoll zur Kommunikation (z.B. Profinet, Profibus, Real-Time-Ethernet) unterstützen.

Eine industrielle Automatisierungseinrichtung kann z.B. eine speicherprogrammierbare Steuerung, ein Modul oder Teil einer speicherprogrammierbaren Steuerung, eine in einem Computer oder PC integrierte speicherprogrammierbare Steuerung sowie entsprechende Feldgeräte, Sensoren und/oder Aktoren, Ein- und/oder Ausgabegeräte oder Ähnliches zum Anschluss an einer speicherprogrammierbare Steuerung sein oder solche umfassen.

Zum Aufbau eines Automatisierungsnetzwerks können mehrere Kommunikationsnetzwerke verwendet werden. Diese Kommunikationsnetzwerke können drahtlos sein. In diesem Fall muss beachtet werden, dass sich die drahtlosen Kommunikationsnetzwerke nicht gegenseitig in der Kommunikation stören.

Der Erfindung liegt die Aufgabe zugrunde, ein verbessertes Verfahren zur Planung eines Automatisierungsnetzwerks zu schaffen. Außerdem liegt der Erfindung die Aufgabe zugrunde, eine verbesserte Netzwerkkomponente eines Automatisierungsnetzwerks, ein verbessertes Automatisierungsnetzwerk und ein verbessertes Speichermedium für ein solches Automatisierungsnetzwerk zu schaffen.

Die der Erfindung zugrunde liegenden Aufgaben werden jeweils mit den Merkmalen der unabhängigen Patentansprüche gelöst. Ausführungsformen der Erfindung sind in den abhängigen Patentansprüchen gegeben.

Ein Automatisierungsnetzwerk umfasst mehrere Sensoren und Aktuatoren. Die Aktuatoren und Sensoren werden von zumindest einer Steuerungseinrichtung gesteuert. Die Aktuatoren, die Sensoren und die zumindest eine Steuerungseinrichtung tauschen Daten miteinander aus. Zum Datenaustausch wird ein Automatisierungsprotokoll verwendet. Die zumindest eine Steuerungseinrichtung steuert die Aktuatoren, die Sensoren und den Datenaustausch so, dass ein maschineller Fertigungsprozess abläuft, in dem z.B. ein Produkt hergestellt wird.

Als Automatisierungsprotokoll im Sinne der vorliegenden Erfindung wird jede Art von Protokoll verstanden, das zur Kommunikation mit Komponenten des Automatisierungsnetzwerks gemäß der vorliegenden Beschreibung vorgesehen, geeignet und/oder eingerichtet ist. Solche Automatisierungsprotokolle können beispielsweise das Profi-Bus-Protokoll (z. B. gemäß IEC 61158/EN50170), ein Profi-Bus-DP-Protokoll, ein Profi-Bus-PA-Protokoll, ein Profi-Net-Protokoll, ein Profi-Net-IO-Protokoll, ein Protokoll gemäß AS-Interface, ein Protokoll gemäß IO-Link, ein KNX-Protokoll, ein Protokoll gemäß einer Mehrpunkt-Schnittstelle (Multipoint-Interface, MPI), ein Protokoll für eine Punkt-zu-Punkt-Kopplung (Point-to-Point, PtP), ein Protokoll gemäß den Spezifikationen der S7-Kommunikation (welches beispielsweise zur Kommunikation von speicherprogrammierbaren Steuerungen der Firma Siemens vorgesehen und eingerichtet ist) oder auch ein Industrial-Ethernet-Protokoll oder Real-Time-Ethernet-Protokoll bzw. weitere spezifische Protokolle für die Kommunikation mit Automatisierungsgeräten sein. Als Automatisierungsprotokoll im Sinne der vorliegenden Beschreibung können auch beliebige Kombinationen der vorgenannten Protokolle vorgesehen sein.

Erfindungsgemäß wird ein Verfahren zur Planung eines Automatisierungsnetzwerks mit zumindest einem ersten und einem zweiten drahtlosen Kommunikationsnetzwerk geschaffen. Das Verfahren umfasst die folgenden Schritte: Zunächst wird zumindest ein erster Frequenzbereich zumindest eines ersten Kanals des ersten drahtlosen Kommunikationsnetzwerks und zumindest ein zweiter Frequenzbereich zumindest eines zweiten Kanals des zweiten drahtlosen Kommunikationsnetzwerks bestimmt. Der erste Kanal und der zweite Kanal weisen jeweils eine Mittenfrequenz auf. Die Mittenfrequenz eines Kanals ist der Frequenzwert, der in der Mitte des jeweiligen Frequenzbereichs liegt.

Es ist zu beachten, dass nicht lediglich die Mittenfrequenzen der Kanäle bestimmt werden, sondern der gesamte Frequenzbereich. Mit anderen Worten wird jeweils die Spektralmaske des jeweiligen Frequenzbereichs bestimmt. Die Spektralmaske begrenzt den jeweiligen Frequenzbereich an einer oberen und einer unteren Grenzfrequenz und legt zwischen der unteren und der oberen Grenzfrequenz Maximalwerte für die Signalintensität für die Frequenzen zwischen der unteren und der oberen Grenzfrequenz fest. Üblicherweise verläuft eine Spektralmaske von beiden Grenzfrequenzen hin zur Mitte ansteigend.

Die Spektralmaske des ersten und des zweiten Kanals kann gemessen werden und/oder durch einen Standard definiert sein und/oder im Datenblatt einer signalübertragenden Komponente des jeweiligen Kommunikationsnetzwerks angegeben sein. Vorzugsweise sind die Spektralmasken durch Standards bekannt und können so bei Ausführungsformen der Erfindung zur Netzwerkplanung verwendet werden.

Anschließend werden Überlappungen des ersten Frequenzbereichs mit dem zweiten Frequenzbereich ermittelt. Eine Überlappung des ersten Frequenzbereichs mit dem zweiten Frequenzbereich ist gleichbedeutend mit einer Überlappung der Spektralmaske des ersten Frequenzbereichs mit der Spektralmaske des zweiten Frequenzbereichs. Falls Überlappungen ermittelt wurden, wird die Mittenfrequenz des ersten Kanals und/oder die Mittenfrequenz des zweiten Kanals verschoben.

Das Verfahren ist vorteilhaft, da so auch Überlappungen im Randbereich des ersten Frequenzbereichs mit dem Randbereich des zweiten Frequenzbereichs erkannt werden. Dadurch können der erste und der zweite Kanal nahe aneinander gelegt werden, sodass das Frequenzspektrum optimal ausgenutzt werden kann, da sich der erste Frequenzbereich direkt an den zweiten Frequenzbereich anschließen kann. Es ist bekannt, bei welcher Frequenz das Signal des ersten Kanals welche Signalintensität nicht übersteigen darf, was genauso für den zweiten Kanal gilt. Interferenzen der beiden Kanäle werden somit bei optimaler Ausnutzung des Frequenzspektrums vermieden.

Nach Ausführungsformen der Erfindung nutzt das zweite drahtlose Kommunikationsnetzwerk eine Gruppe von zweiten Kanälen mit zweiten Frequenzbereichen für die Kommunikation. Die zweiten Frequenzbereiche einer Untergruppe der zweiten Kanäle überlappen zumindest teilweise mit dem ersten Frequenzbereich. Die Untergruppe der zweiten Kanäle wird nicht für Datenübertragungen im zweiten Kommunikationsnetzwerk benutzt.

Mit anderen Worten ist das zweite Netzwerk ausgebildet, Daten über mehrere zweite Kanäle zu übertragen. Falls die zweiten Frequenzbereiche einer Untergruppe der zweiten Kanäle zumindest teilweise mit dem ersten Frequenzbereich überlappen, werden diese zweiten Kanäle der Untergruppe der zweiten Kanäle nicht für Datenübertragung benutzt. Die Datenübertragungen finden also über die zweiten Kanäle statt, die nicht zu der Untergruppe der zweiten Kanäle gehören.

Anders formuliert werden die zweiten Kanäle nicht für Datenübertragungen genutzt, deren zweiten Frequenzbereiche mit dem ersten Frequenzbereich zumindest teilweise überlappen. Dies ist besonders vorteilhaft für sogenannte Frequency Hopping Systeme. Bei solchen Frequency Hopping Systemen wird die zu übertragende Information nacheinander auf viele Kanäle verteilt. Zu einem Zeitpunkt wird immer nur ein Frequenzkanal genutzt. Dadurch ergibt sich, obwohl jeder Kanal eine kleinere Bandbreite besitzt, für das Gesamtsignal eine größere Bandbreite. Bluetooth ist zum Beispiel ein solches Frequency Hopping System.

Besonders vorteilhaft ist dieses Verfahren ebenfalls beim sogenannten Direct Sequence Spread Spectrum (DSSS)-Verfahren. Hierbei werden die Informationen in direkter Folge per "exklusivem oder" (XOR) mit einem Spreizcode verknüpft und anschließend auf einen Träger aufmoduliert. Das Direktsequenz-Spreizspektrum-Verfahren wird zum Beispiel bei WLANs nach dem IEEE 802.11 Standard und UMTS verwendet.

Die Untergruppe der zweiten Kanäle, die nicht für Datenübertragung im zweiten Kommunikationsnetzwerk benutzt werden, kann manuell oder automatisch bestimmt werden. Bei einer manuellen Bestimmung wird die Untergruppe während des Planungsverfahrens durch einen Benutzer festgelegt. Bei der automatischen Feststellung der Untergruppe werden die Frequenzbereiche des ersten und des zweiten drahtlosen Kommunikationsnetzwerks analysiert und automatisch festgelegt, welche zweiten Kanäle zu der Untergruppe der zweiten Kanäle gehören.

Nach Ausführungsformen der Erfindung sind die Frequenzbereiche des ersten und des zweiten Kommunikationsnetzwerks gemessen und/oder durch Spezifikationen bestimmt. Solche Spezifikationen bestehen zum Beispiel für WLAN oder Bluetooth.

Nach Ausführungsformen der Erfindung weist das erste drahtlose Kommunikationsnetzwerk eine erste Netzabdeckung auf. Das zweite drahtlose Kommunikationsnetzwerk weist eine zweite Netzabdeckung auf. Die jeweiligen Netzabdeckungen werden unter Berücksichtigung der räumlichen Umgebung des jeweiligen Netzwerks simuliert. Die Simulation der Netzabdeckungen berücksichtigt sowohl einen ersten Wert als Maß für die Qualität eines durch ein Endgerät von einem zentralen Netzwerkknoten empfangenen ersten Signals als auch einen zweiten Wert als Maß für die Qualität eines durch den zentralen Netzwerkknoten von dem Endgerät empfangenen zweiten Signals. Sowohl für das erste als auch für das zweite Kommunikationsnetzwerk werden bei der Simulation also für jeden Raumpunkt ein erster und ein zweiter Wert als Maß für die Qualität eines ersten und eines zweiten Signals berücksichtigt. Bei der Simulation wird die räumliche Umgebung berücksichtigt. Das heißt, dass beispielsweise Wände, Maschinen, die die Signalübertragung beeinflussen können, oder auch Decken für die Simulation berücksichtigt werden, da diese Signale der Kommunikationsnetzwerke abschwächen.

Jedes der Kommunikationsnetzwerke verfügt über einen zentralen Netzwerkknoten. Dies kann beispielsweise ein WLAN-Router sein. Ein Endgerät wird hier als Gerät verstanden, das Signale von einem Netzwerkknoten empfangen und Signale zu einem Netzwerkknoten senden kann. Es wird also für die Simulation sowohl die Empfangsqualität eines vom Netzwerkknoten zum Endgerät gesendeten Signals und auch die Empfangsqualität eines vom Endgerät zum Netzwerkknoten gesendeten Signals berücksichtigt. Dies gilt sowohl für das erste Kommunikationsnetzwerk als auch für das zweite Kommunikationsnetzwerk.

Die Empfangsqualitäten am Endgerät und am Netzwerkknoten können unterschiedlich sein, wenn zum Beispiel der Netzwerkknoten über eine höhere Sendeleistung oder über eine Richtantenne verfügt. Dann ist es vorteilhaft, auch die Empfangsqualität des vom Endgerät zum Netzwerkknoten gesendeten Signals zu berücksichtigen. Wenn beispielsweise der Netzwerkknoten über eine höhere Sendestärke als das Endgerät verfügt, kann es sein, dass an einem bestimmten Ortspunkt die Signale des Netzwerkknotens vom Endgerät in ausreichender Qualität empfangen werden können. Signale, die vom Endgerät zum Netzwerkknoten übertragen werden sollen, können hingegen nicht vom Netzwerkknoten empfangen werden, da das Endgerät über eine geringere Abstrahlleistung verfügt. Durch die Simulation wird also für jeden Ortspunkt berücksichtigt, dass die Empfangsqualität eines Signals, das vom Endgerät empfangen wird, sich von der Empfangsqualität eines Signals, das vom Netzwerkknoten empfangen wird, unterscheiden kann.

Ausführungsformen der Erfindung betreffen also ein Verfahren zur Planung eines Kommunikationsnetzwerks. Das Kommunikationsnetzwerk weist eine Netzabdeckung auf. Die Netzabdeckung wird unter Berücksichtigung der räumlichen Umgebung des Kommunikationsnetzwerks simuliert. Die Simulation der Netzabdeckung berücksichtigt sowohl einen ersten Wert als Maß für die Qualität eines durch ein Endgerät von einem zentralen Netzwerkknoten empfangenen ersten Signals als auch einen zweiten Wert als Maß für die Qualität eines durch den zentralen Netzwerkknoten von dem Endgerät empfangenen zweiten Signals. Dieses Verfahren kann auf das erste und das zweite drahtlose Kommunikationsnetzwerks des Automatisierungsnetzwerks angewandt werden.

Nach Ausführungsformen der Erfindung wird zur Simulation der Netzabdeckung der erste Wert mit dem zweiten Wert verglichen und der kleinere Wert für die Simulation der Netzabdeckung verwendet.

Dies ist vorteilhaft, da so immer die schlechtere Empfangsqualität für die Simulation verwendet wird und damit eventuelle Lücken in der Netzabdeckung ermittelt werden können, auch wenn diese nur in einer Signalrichtung auftreten.

Nach Ausführungsformen der Erfindung wird zur Planung des Automatisierungsnetzwerks ein Simulations-Computerprogramm verwendet.

Nach Ausführungsformen der Erfindung wird das Simulations-Computerprogramm auf einem Computer ausgeführt und der Computer verfügt über ein Ausgabegerät für visuelle Information. Die visuellen Informationen umfassen die räumlichen Netzabdeckungen. Die Höhe des kleineren Wertes an einem Ortspunkt wird durch eine farbige Linie zwischen dem Endgerät an diesem Ortspunkt mit dem zentralen Netzwerkknoten dargestellt. Das Ausgabegerät für visuelle Informationen des Computers kann beispielsweise ein Monitor sein. Die farbige Linie ist besonders vorteilhaft, da sie für den Benutzer deutlich darstellt, wie die Empfangsqualität eines Signals an diesem Ortspunkt ist. Der Benutzer erhält so eine einfache Darstellung des Simulationsergebnisses.

In einem weiteren Aspekt betrifft die Erfindung eine Netzwerkkomponente eines Automatisierungsnetzwerk mit Mitteln zur Bestimmung zumindest eines ersten Frequenzbereichs zumindest eines ersten Kanals des ersten drahtlosen Kommunikationsnetzwerks und zumindest eines zweiten Frequenzbereichs zumindest eines zweiten Kanals des zweiten drahtlosen Kommunikationsnetzwerks. Der erste Kanal und der zweite Kanal weisen jeweils eine Mittenfrequenz auf. Ferner weist das Automatisierungsnetzwerk Mittel zur Ermittlung von Überlappungen des ersten Frequenzbereichs mit dem zweiten Frequenzbereich auf und Mittel zur Verschiebung der Mittenfrequenz des ersten Kanals und/oder der Mittenfrequenz des zweiten Kanals, falls Überlappungen ermittelt wurden.

In einem weiteren Aspekt betrifft die Erfindung ein computerlesbares Speichermedium mit Instruktionen, die bei Ausführung in einem Automatisierungsnetzwerk mit zumindest einem ersten und einem zweiten drahtlosen Kommunikationsnetzwerk das Automatisierungsnetzwerk zur Ausführung des folgenden Verfahrens veranlassen. Zunächst wird ein erster Frequenzbereich zumindest eines ersten Kanals des ersten drahtlosen Kommunikationsnetzwerks und zumindest ein zweiter Frequenzbereich zumindest eines zweiten Kanals des zweiten drahtlosen Kommunikationsnetzwerks bestimmt. Der erste Kanal und der zweite Kanal weisen jeweils eine Mittenfrequenz auf. Dann werden Überlappungen des ersten Frequenzbereichs mit dem zweiten Frequenzbereich ermittelt. Falls Überlappungen ermittelt wurden, wird die Mittenfrequenz des ersten Kanals und/oder die Mittenfrequenz des zweiten Kanals verschoben.

In noch einem weiteren Aspekt betrifft die Erfindung einen Netzwerkknoten, wie z.B. einen Router, eines Kommunikationsnetzwerks. Das Kommunikationsnetzwerk weist eine Netzabdeckung auf. Die Netzabdeckung wird unter Berücksichtigung der räumlichen Umgebung des Kommunikationsnetzwerks simuliert. Die Simulation der Netzabdeckung berücksichtigt sowohl einen ersten Wert als Maß für die Qualität eines durch ein Endgerät von einem zentralen Netzwerkknoten empfangenen ersten Signals als auch einen zweiten Wert als Maß für die Qualität eines durch den zentralen Netzwerkknoten von dem Endgerät empfangenen zweiten Signals. Dieses Verfahren kann selbstverständlich auf das erste und das zweite drahtlose Kommunikationsnetzwerks des Automatisierungsnetzwerks angewandt werden.

In noch einem weiteren Aspekt betrifft die Erfindung ein computerlesbares Speichermedium mit Instruktionen, die bei Ausführung in einem Netzwerkknoten eines Kommunikationsnetzwerks den Netzwerkknoten zur Ausführung des folgenden Verfahrens veranlassen. Das Kommunikationsnetzwerk weist eine Netzabdeckung auf. Die Netzabdeckung wird unter Berücksichtigung der räumlichen Umgebung des Kommunikationsnetzwerks simuliert. Die Simulation der Netzabdeckung berücksichtigt sowohl einen ersten Wert als Maß für die Qualität eines durch ein Endgerät von einem zentralen Netzwerkknoten empfangenen ersten Signals als auch einen zweiten Wert als Maß für die Qualität eines durch den zentralen Netzwerkknoten von dem Endgerät empfangenen zweiten Signals. Dieses Verfahren kann selbstverständlich auf das erste und das zweite drahtlose Kommunikationsnetzwerks des Automatisierungsnetzwerks angewandt werden.

Es ist zu beachten, dass nicht nur Automatisierungsnetzwerke nach Ausführungsformen der Erfindung geplant werden können, sondern auch andere Netzwerke, wie zum Beispiel Heim- oder Büronetzwerke.

Im Weiteren werden Ausführungsformen der Erfindung mit Bezugnahme auf die Zeichnungen näher erläutert. Es zeigen:
- Figur 1: eine grafische Darstellung mehrerer Frequenzbereiche mehrerer Kanäle zumindest eines Kommunikationsnetzwerks;
- Figur 2a: eine grafische Darstellung mehrerer Frequenzbereiche mehrerer Kanäle zweiter Kommunikationsnetzwerke, wobei die Frequenzbereiche einer Untergruppe von zweiten Kanälen zumindest teilweise mit einem ersten Frequenzbereich eines ersten Kanals überlappen;
- Figur 2b: eine grafische Darstellung von Frequenzbereichen, die zur Signalübertragung genutzt werden;
- Figur 3: eine schematische Darstellung der Simulationsvisualisierung;
- Figur 4: ein Blockdiagramm einer Netzwerkkomponente eines Automatisierungsnetzwerks, das zur Planung des Automatisierungsnetzwerks dienen kann; und
- Figur 5: ein Flussdiagramm eines Verfahrens zur Planung eines Automatisierungsnetzwerks.

Elemente der nachfolgenden Figuren, die einander entsprechen, sind mit denselben Bezugszeichen gekennzeichnet.

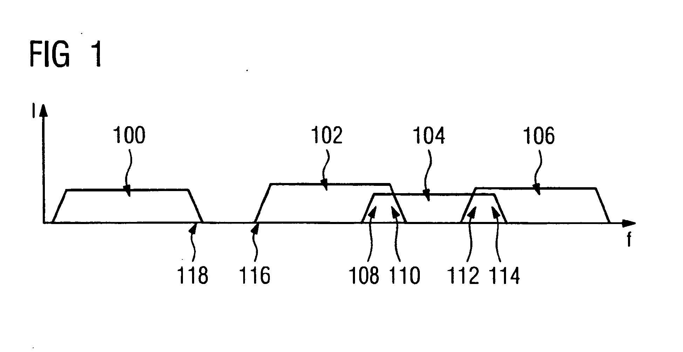

Figur 1 ist eine grafische Darstellung mehrerer Frequenzbereiche 100, 102, 104, 106. Die waagrechte X-Achse stellt ein Frequenzspektrum dar und die senkrechte Y-Achse entspricht einer Signalstärke I. Das Diagramm in Figur 1 zeigt also Signalstärken I in Abhängigkeit von Frequenzen f. Es sind vier Frequenzbereiche 100 bis 106 dargestellt, wobei der erste Frequenzbereich 100 eines ersten Kanals mit keinem der anderen Frequenzbereiche überlappt. Der zweite Frequenzbereich 102 überlappt in einem oberen Grenzbereich 108 mit einem unteren Grenzbereich 110 des Frequenzbereichs 104. Der obere Grenzbereich 112 des Frequenzbereichs 104 überlappt mit dem unteren Grenzbereich 114 des Frequenzbereichs 106. Die Frequenzbereiche 100 bis 106 können auch als Spektralmasken bezeichnet werden. Die Frequenzbereiche 100 bis 106 stellen für den jeweiligen Kanal die maximal nutzbare Signalintensität in Abhängigkeit von der Signalfrequenz dar. Ein Signal, das beispielsweise über den Kanal übertragen wird, der den Frequenzbereich 100 nutzt, kann innerhalb der Grenzen des Frequenzbereichs 100 jede Frequenz belegen. Das Signal muss aber nicht jede Frequenz belegen. Das Signal kann also auch lediglich mit einer einzigen Frequenz innerhalb des Frequenzbereichs 100 oder mit mehreren Frequenzen innerhalb des Frequenzbereichs 100 übertragen werden. Die Intensität des Signals darf dabei allerdings nicht die obere Begrenzung des Frequenzbereichs 100 übersteigen. Das gleiche gilt für die Frequenzbereiche 102 bis 106 und die dazu gehörigen Kanäle.

Die Überlappungen in den Bereichen 108 bis 114 werden nach Ausführungsformen der Erfindung von einer Netzwerkkomponente des Automatisierungsnetzwerks erkannt. Diese Netzwerkkomponente kann beispielsweise ein Computer sein, der zur Planung des Netzwerks dient. Die Erkennung der Überlappungsbereiche 108 bis 114 kann automatisch erfolgen oder manuell an dem Computer eingegeben werden. Die Frequenzbereiche 100 bis 106 können entweder gemessen werden, durch Spezifikationen und/oder Standards definiert sein und/oder im Datenblatt der signalübertragenden Netzwerkkomponente angegeben sein. Die signalübertragende Netzwerkkomponente kann beispielsweise ein Netzwerkrouter, zum Beispiel ein WLAN-Router, sein.

Alternativ oder zusätzlich werden die Überlappungen in den Bereichen 108 bis 114 bei einer Simulation des Automatisierungsnetzwerks erkannt.

Nach Ausführungsformen der Erfindung werden die Mittenfrequenzen der Frequenzbereiche 102 bis 106 so verschoben, dass die Grenzbereiche 108 bis 114 nicht mehr überlappen. Es könnte also beispielsweise die Mittenfrequenz des Frequenzbereichs 102 etwas nach links, also zu einer niedrigeren Frequenz hin, verschoben werden. Die Mittenfrequenz von Frequenzbereich 102 kann so weit in dem Diagramm nach links verschoben werden, bis die untere Grenze 116 von Frequenzbereich 102 an die obere Grenze 118 von Frequenzbereich 100 angrenzt. Ebenso kann mit den Frequenzbereichen 104 und 106 verfahren werden. Die Mittenfrequenzen der Frequenzbereiche 104 und 106 werden so verschoben, dass sich die Frequenzbereiche 100 bis 106 an keiner Stelle des Frequenzspektrums mehr überlagern. Dadurch, dass für die Planung nicht nur die Mittenfrequenzen, sondern die gesamten Frequenzbereiche 100 bis 106 berücksichtigt werden, kann das Frequenzspektrum optimal ausgenutzt werden. Es sind zwischen den Frequenzbereichen 100 bis 106 keine Zwischenräume, die nicht zur Signalübertragung genutzt werden können, nötig.

Falls es nicht möglich ist, innerhalb eines Frequenzbandes die Frequenzbereiche 100 bis 106 so anzuordnen, dass sich die Frequenzbereiche 100 bis 106 nirgendwo überlappen, können Überlappungen zweier oder mehrerer Frequenzbereiche zugelassen werden. Überlappungen werden vorzugsweise für solche Frequenzbereiche zugelassen, bei denen die geringsten Störungen aufgrund der Überlappungen erwartet werden. Alternativ oder zusätzlich können einer oder mehrere Frequenzbereiche in ein anderes Frequenzband verschoben werden.

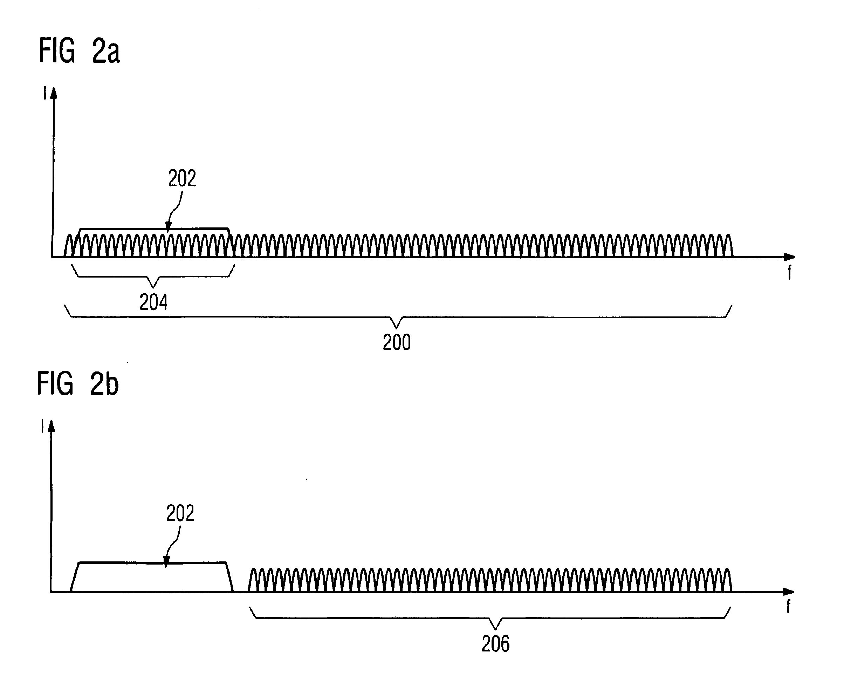

Figur 2a ist eine grafische Darstellung einer Gruppe von Frequenzbereichen 200 und einem Frequenzbereich 202. Eine Untergruppe 204 der Frequenzbereiche 202 überlappt zumindest teilweise mit dem Frequenzbereich 202. In Figur 2b sind lediglich die Frequenzbereiche der Frequenzbereichsgruppe 200 dargestellt, die zur Signalübertragung genutzt werden. Die Untergruppe 204 wird nicht zur Signalübertragung verwendet, da diese Frequenzbereiche zumindest teilweise mit dem Frequenzbereich 202 überlappen. So werden Überlappungen der Frequenzbereiche der Gruppe 200 und des Frequenzbereichs 202 vermieden. Die Frequenzbereichsgruppe 200 kann beispielsweise eine Gruppe von Frequenzbereichen eines Frequency Hopping Netzwerks sein. Dies ist zum Beispiel bei Bluetooth der Fall. Hier wird für eine Signalübertragung lediglich ein Frequenzbereich verwendet. Der verwendete Frequenzbereich wird jedoch für jede Signalübertragung aus der Gruppe der Frequenzbereiche 200 neu gewählt. Nach Ausführungsformen der Erfindung wird die Untergruppe 204 nicht für Signalübertragungen verwendet, da die Frequenzbereiche der Untergruppe 204 zumindest teilweise mit dem Frequenzbereich 202 überlappen. Es werden lediglich die Frequenzbereiche der Untergruppe 206 verwendet. Die Untergruppe 206 besteht aus den Frequenzbereichen, die nicht teilweise oder ganz mit dem Frequenzbereich 202 überlappen.

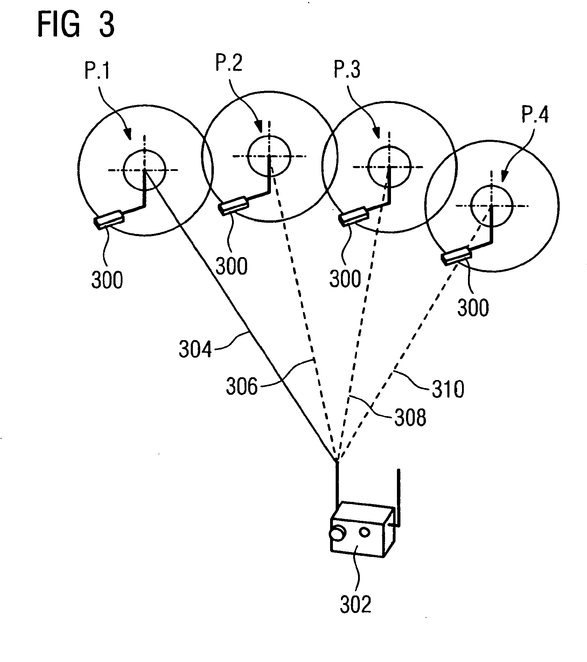

Figur 3 ist eine schematische Ansicht einer Visualisierungsmöglichkeit der Simulation von Signalstärken. Ein Endgerät 300 kann sich beispielsweise an den Ortspunkten P.1, P.2, P.3 oder P.4 befinden. Unter Berücksichtigung der räumlichen Umgebung des Netzwerks wird dann eine Signalübertragung von einem Netzwerkknoten 302 zu dem Endgerät 300 an den Ortspunkten P.1 bis P.4 und von dem Endgerät 300 an den Ortspunkten P.1 bis P.4 an den Netzwerkknoten 302 simuliert. Dem Benutzer wird farblich dargestellt, beispielsweise mit Hilfe der Linien 304, 306, 308, 310, wie gut die empfangene Signalstärke an dem jeweiligen Punkt P.1 bis P. ist. Die Darstellung kann beispielsweise auf einem Computermonitor erfolgen. Hierzu wird einerseits simuliert, dass ein Signal vom Netzwerkknoten 302 zum Endgerät 300 an den Orten P.1 bis P.4 übertragen wird und dort von dem Endgerät 300 empfangen wird. Es wird ferner simuliert, dass ein Signal vom Endgerät 300 an den Orten P.1 bis P.4 zum Netzwerkknoten 302 übertragen wird. Der niedrigere der beiden Werte wird dem Benutzer farblich durch die Linien 304 bis 310 dargestellt. Ein niedrigerer Wert kann beispielsweise rötlich dargestellt werden und höhere Werte beispielsweise mit einer grünlichen Farbe. Es wird jeweils der niedrigere der zwei simulierten Werte angezeigt. Falls also der Netzwerkknoten 302 über eine größere Sendeleistung als das Endgerät 300 verfügt, wird farblich die Signalempfangsstärke am Netzwerkknoten 302 dargestellt. So wird verhindert, dass bei der Netzwerkplanung die empfangene Signalstärke von einem Signal des Netzwerkknotens 302 an einem bestimmten Ort zwar noch ausreichend ist, aber nicht die Signalstärke des vom Netzwerkknoten 302 empfangenen Signals, das zuvor vom Endgerät 300 gesendet wurde.

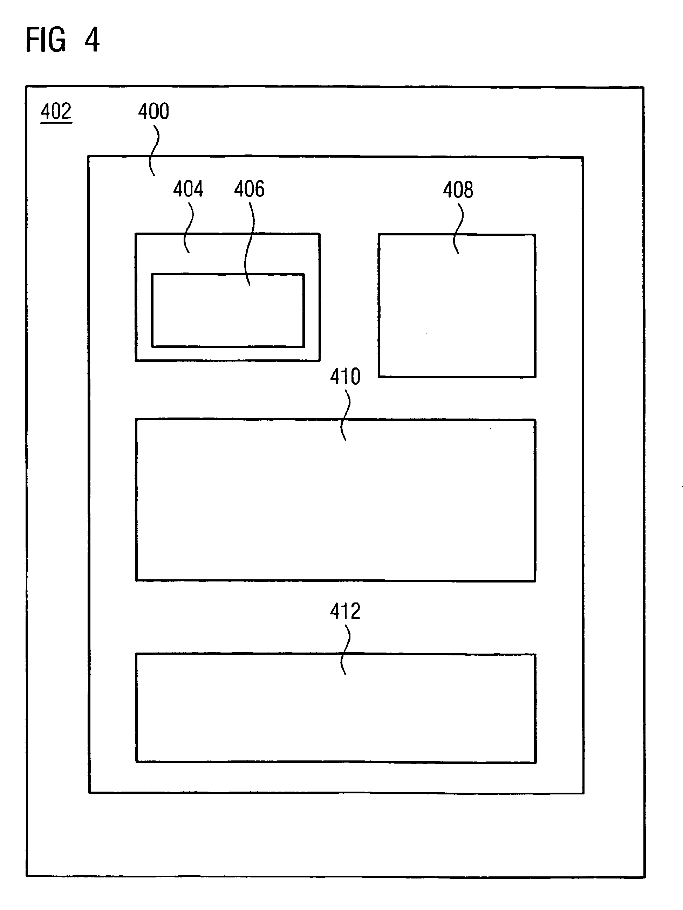

Figur 4 ist ein Blockdiagramm einer Netzwerkkomponente 400 eines Automatisierungsnetzwerks 402. Das Automatisierungsnetzwerk 402 kann beispielsweise auch noch andere Automatisierungsnetzwerkskomponenten wie zum Beispiel industrielle Maschinen oder Steuergeräte umfassen. Diese sind in der Figur jedoch nicht dargestellt. Die Netzwerkkomponente 400 dient zur Planung des Automatisierungsnetzwerks 402. Dies kann beispielsweise ein Computer sein, der für die Planung des Automatisierungsnetzwerks 402 verwendet wird.

Das hier für die Netzwerkkomponente 400 beschriebene Verfahren kann ebenso während einer Simulation des Automatisierungsnetzwerks von einem Computer durchgeführt werden.

Die Netzwerkkomponente 400 umfasst zumindest einen Datenspeicher 404, in dem ein Programm 406 mit Programminstruktionen abgespeichert ist. Außerdem umfasst die Netzwerkkomponente 400 zumindest einen Prozessor 408, der zur Ausführung des Programms 406 ausgebildet ist. Die Netzwerkkomponente 400 umfasst ebenfalls einen Bildschirm 410, der zu visuellen Darstellung von Daten für den Benutzer de Netzwerkkomponente 400 ausgebildet ist.

Außerdem verfügt die Netzwerkkomponente 400 über Mittel zur Bestimmung zumindest eines ersten Frequenzbereichs zumindest eines ersten Kanals zumindest eines Kommunikationsnetzwerks. Dies können beispielsweise Antennen sein, mit denen die Frequenzbereiche gemessen werden. Alternativ können dies auch Mittel sein, die dem Benutzer erlauben, Daten in die Netzwerkkomponente einzugeben, wie zum Beispiel eine Tastatur. Der Benutzer kann dann die Daten des oder der relevanten Frequenzbereiche an der Netzwerkkomponente 400 mit Hilfe der Tastatur eingeben. Dem Benutzer können die Daten entweder aus Standards oder Spezifikationen bekannt sein oder sie sind in dem Datenblatt einer Netzwerkkomponente des Netzwerks 402 angegeben.

Im Betrieb führt der Prozessor 408 das Programm 406 aus. So wird zumindest ein erster Frequenzbereich zumindest eines ersten Kanals eines ersten drahtlosen Kommunikationsnetzwerks und zumindest eines zweiten Frequenzbereichs zumindest eines zweiten Kanals eines zweiten drahtlosen Kommunikationsnetzwerks bestimmt. Die Bestimmung kann wie oben beschrieben entweder automatisch erfolgen oder die für die Bestimmung relevanten Daten werden vom Benutzer eingegeben. Anschließend ermittelt der Prozessor durch Ausführung des Programms 406 Überlappungen des ersten Frequenzbereichs mit dem zweiten Frequenzbereich. Durch die Programminstruktionen des Programms 406 wird der Prozessor 408 in diesem Fall dazu veranlasst, die Mittenfrequenz des ersten Kanals oder die Mittenfrequenz des zweiten Kanals zu verschieben. Alternativ können beide Mittenfrequenzen verschoben werden.

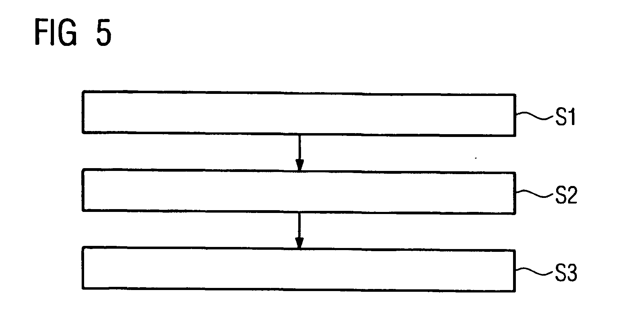

Figur 5 ist ein Flussdiagramm eines Verfahrens zur Planung eines Automatisierungsnetzwerks. In einem ersten Schritt S1 wird zumindest ein erster Frequenzbereich zumindest eines ersten Kanals des ersten drahtlosen Kommunikationsnetzwerks und zumindest ein zweiter Frequenzbereich zumindest eines zweiten Kanals eines zweiten drahtlosen Kommunikationsnetzwerks bestimmt. Anschließend werden in Schritt S2 Überlappungen der beiden Frequenzbereiche ermittelt. Falls Überlappungen ermittelt wurden, wird die Mittenfrequenz des ersten Kanals und/oder die Mittenfrequenz des zweiten Kanals in einem dritten Schritt S3 verschoben. Die Verschiebung erfolgt so, dass es keine Überlappung der beiden Frequenzbereiche mehr gibt.

**Bezugszeichenliste**

| | |
|---|---|
| 100 | Frequenzbereich |
| 102 | Frequenzbereich |
| 104 | Frequenzbereich |
| 106 | Frequenzbereich |
| 108 | oberer Grenzbereich |
| 110 | unterer Grenzbereich |
| 112 | oberer Grenzbereich |
| 114 | unterer Grenzbereich |
| 116 | untere Grenze |
| 118 | obere Grenze |
| 200 | Frequenzbereichsgruppe |
| 202 | Frequenzbereich |
| 204 | Untergruppe |
| 206 | Untergruppe |
| 300 | Endgerät |
| 302 | Netzwerkknoten |
| 304 | Linie |
| 306 | Linie |
| 308 | Linie |
| 310 | Linie |
| 400 | Netzwerkkomponente |
| 402 | Automatisierungsnetzwerk |
| 404 | Datenspeicher |
| 406 | Programm |
| 408 | Prozessor |
| 410 | Bildschirm |
| 412 | Mittel zur Bestimmung |

## Patentansprüche

1. Verfahren zur Planung eines Automatisierungsnetzwerks (402) mit zumindest einer zur Steuerung oder Regelung industrieller Anlagen ausgebildeten und eingerichteten industriellen Automatisierungseinrichtung, drahtgebundenen und/oder drahtungebundenen Kommunikationskomponenten sowie einem ersten und einem zweiten drahtlosen Kommunikationsnetzwerk, wobei das Verfahren die folgenden Schritte umfasst:
- Bestimmung (S1) zumindest eines ersten Frequenzbereichs (100; 102; 202) zumindest eines ersten Kanals des ersten drahtlosen Kommunikationsnetzwerks und zumindest eines zweiten Frequenzbereichs (104; 106) zumindest eines zweiten Kanals des zweiten drahtlosen Kommunikationsnetzwerks, wobei der erste Kanal und der zweite Kanal jeweils eine Mittenfrequenz aufweisen;
- Ermittlung (S2) von Überlappungen (108; 110; 112; 114) des ersten Frequenzbereich mit dem zweiten Frequenzbereich;
- Verschiebung (S3) der Mittenfrequenz des ersten Kanals und/oder der Mittenfrequenz des zweiten Kanals, falls Überlappungen ermittelt wurden.

2. Verfahren nach Anspruch 1, wobei das zweite drahtlose Kommunikationsnetzwerk eine Gruppe (200) von zweiten Kanälen mit zweiten Frequenzbereichen für die Kommunikation nutzt, und wobei die zweiten Frequenzbereiche einer Untergruppe (204) der zweiten Kanäle zumindest teilweise mit dem ersten Frequenzbereich überlappen, und wobei die Untergruppe der zweiten Kanäle nicht für Datenübertragungen im zweiten Kommunikationsnetzwerk genutzt wird.

3. Verfahren nach einem der vorhergehenden Ansprüche, wobei die Frequenzbereiche gemessen werden.

4. Verfahren nach einem der vorhergehenden Ansprüche, wobei das erste drahtlose Kommunikationsnetzwerk eine erste Netzabdeckung aufweist und das zweite drahtlose Kommunikationsnetzwerk eine zweite Netzabdeckung aufweist, wobei die jeweiligen Netzabdeckungen unter Berücksichtigung der räumlichen Umgebung des jeweiligen Kommunikationsnetzwerks simuliert werden, und wobei die Simulation der Netzabdeckungen sowohl einen ersten Wert als Maß für die Qualität eines durch ein Endgerät von einem zentralen Netzwerkknoten empfangenen ersten Signals als auch einen zweiten Wert als Maß für die Qualität eines durch den zentralen Netzwerkknoten von dem Endgerät empfangenen zweiten Signals berücksichtigt.

5. Verfahren nach Anspruch 4, wobei zur Simulation der Netzabdeckung der erste Wert mit dem zweiten Wert verglichen wird und der kleinere Wert für die Simulation der Netzabdeckung verwendet wird.

6. Verfahren nach einem der vorhergehenden Ansprüche, wobei zur Planung des Automatisierungsnetzwerks ein Simulationscomputerprogramm (406) verwendet wird.

7. Verfahren nach Anspruch 6, wobei das Simulationscomputerprogramm auf einem Computer ausgeführt wird und der Computer ein Ausgabegerät für visuelle Informationen hat, wobei die visuellen Informationen die räumlichen Netzabdeckungen umfassen, und wobei die Höhe des kleineren Werts an einem Ortspunkt (P.1; P.2; P.3; P.4) durch eine farbige Linie zwischen dem Endgerät an diesem Ortspunkt und dem zentralen Netzwerkknoten dargestellt wird.

8. Verfahren nach Anspruch 6, wobei das Simulationscomputerprogramm auf einem Computer ausgeführt wird und der Computer ein Ausgabegerät (410) für visuelle Informationen hat, wobei die visuellen Informationen die räumlichen Netzabdeckungen umfassen, und wobei die Höhe des kleineren Werts eines Ortpunkts durch einen farbigen Pixel dargestellt wird.

9. Verfahren nach Anspruch 6, wobei das Simulationscomputerprogramm auf einem Computer ausgeführt wird und der Computer ein Ausgabegerät (410) für visuelle Informationen hat, wobei die visuellen Informationen die Frequenzbereiche umfassen, und wobei die Frequenzbereiche als Blöcke in einem Frequenzspektrum dargestellt werden.

10. Computer zur Planung eines Automatisierungsnetzwerks, das zumindest eine zur Steuerung oder Regelung industrieller Anlagen ausgebildete und eingerichtete industrielle Automatisierungseinrichtung, drahtgebundene und/oder drahtungebundene Kommunikationskomponenten sowie ein erstes und ein zweites drahtloses Kommunikationsnetzwerk umfasst, mit:
- Mitteln zur Bestimmung (412) zumindest eines ersten Frequenzbereichs zumindest eines ersten Kanals des ersten drahtlosen Kommunikationsnetzwerks und zumindest eines zweiten Frequenzbereichs zumindest eines zweiten Kanals des zweiten drahtlosen Kommunikationsnetzwerks, wobei der erste Kanal und der zweite Kanal jeweils eine Mittenfrequenz aufweisen;
- Mittel zur Ermittlung (408) von Überlappungen des ersten Frequenzbereich mit dem zweiten Frequenzbereich;
- Mittel zur Verschiebung (408) der Mittenfrequenz des ersten Kanals und/oder der Mittenfrequenz des zweiten Kanals, falls Überlappungen ermittelt wurden.

11. Automatisierungsnetzwerk (402) mit zumindest einem
- ersten und einem zweiten drahtlosen Kommunikationsnetzwerk und einem Computer nach Anspruch 10 zur Planung eines Automatisierungsnetzwerks.

12. Computerlesbares Speichermedium (404) mit Instruktionen (406), die bei Ausführung in einem Automatisierungsnetzwerk, das zumindest eine Automatisierungseinrichtung, drahtgebundene und/oder drahtungebundene Kommunikationskomponenten sowie ein erstes und ein zweites drahtloses Kommunikationsnetzwerk umfasst, das Automatisierungsnetzwerk zur Ausführung des folgenden Verfahrens veranlassen:
- Bestimmung zumindest eines ersten Frequenzbereichs zumindest eines ersten Kanals des ersten drahtlosen Kommunikationsnetzwerks und zumindest eines zweiten Frequenzbereichs zumindest eines zweiten Kanals des zweiten drahtlosen Kommunikationsnetzwerks, wobei der erste Kanal und der zweite Kanal jeweils eine Mittenfrequenz aufweisen;
- Ermittlung von Überlappungen des ersten Frequenzbereich mit dem zweiten Frequenzbereich;
- Verschiebung der Mittenfrequenz des ersten Kanals und/oder der Mittenfrequenz des zweiten Kanals, falls Überlappungen ermittelt wurden.

## Claims

1. Method for planning an automation network (402) having at least one industrial automation device which is designed and set up to control or regulate industrial installations, wired and/or wireless communication components and a first and a second wireless communication network, wherein the method comprises the following steps of:
- determining (S1) at least one first frequency range (100; 102; 202) of at least one first channel of the first wireless communication network and at least one second frequency range (104; 106) of at least one second channel of the second wireless communication network, wherein the first channel and the second channel each have a centre frequency;
- determining (S2) overlaps (108; 110; 112; 114) between the first frequency range and the second frequency range;
- shifting (S3) the centre frequency of the first channel and/or the centre frequency of the second channel if overlaps have been determined.

2. Method according to Claim 1, wherein the second wireless communication network uses a group (200) of second channels with second frequency ranges for communication, and wherein the second frequency ranges of a subgroup (204) of the second channels at least partially overlap the first frequency range, and wherein the subgroup of the second channels is not used to transmit data in the second communication network.

3. Method according to one of the preceding claims, wherein the frequency ranges are measured.

4. Method according to one of the preceding claims, wherein the first wireless communication network has a first network coverage and the second wireless communication network has a second network coverage, wherein the respective network coverages are simulated taking into account the spatial environment of the respective communication network, and wherein the simulation of the network coverages takes into account both a first value as a measure of the quality of a first signal received by a terminal from a central network node and a second value as a measure of the quality of a second signal received by the central network node from the terminal.

5. Method according to Claim 4, wherein, in order to simulate the network coverage, the first value is compared with the second value and the smaller value is used to simulate the network coverage.

6. Method according to one of the preceding claims, wherein a simulation computer program (406) is used to plan the automation network.

7. Method according to Claim 6, wherein the simulation computer program is executed on a computer and the computer has an output device for visual information, wherein the visual information comprises the spatial network coverages, and wherein the level of the smaller value at a location (P.1; P.2; P.3; P.4) is represented by a coloured line between the terminal at this location and the central network node.

8. Method according to Claim 6, wherein the simulation computer program is executed on a computer and the computer has an output device (410) for visual information, wherein the visual information comprises the spatial network coverages, and wherein the level of the smaller value of a location is represented by a coloured pixel.

9. Method according to Claim 6, wherein the simulation computer program is executed on a computer and the computer has an output device (410) for visual information, wherein the visual information comprises the frequency ranges, and wherein the frequency ranges are represented as blocks in a frequency spectrum.

10. Computer for planning an automation network comprising at least one industrial automation device which is designed and set up to control or regulate industrial installations, wired and/or wireless communication components and a first and a second wireless communication network, having:
- means (412) for determining at least one first frequency range of at least one first channel of the first wireless communication network and at least one second frequency range of at least one second channel of the second wireless communication network, wherein the first channel and the second channel each have a centre frequency;
- means (408) for determining overlaps between the first frequency range and the second frequency range;
- means (408) for shifting the centre frequency of the first channel and/or the centre frequency of the second channel if overlaps have been determined.

11. Automation network (402) having at least one first and one second wireless communication network and a computer according to Claim 10 for planning an automation network.

12. Computer-readable storage medium (404) having instructions (406) which, when executed in an automation network comprising at least one automation device, wired and/or wireless communication components and a first and a second wireless communication network, cause the automation network to carry out the following method:
- determining at least one first frequency range of at least one first channel of the first wireless communication network and at least one second frequency range of at least one second channel of the second wireless communication network, wherein the first channel and the second channel each have a centre frequency;
- determining overlaps between the first frequency range and the second frequency range;
- shifting the centre frequency of the first channel and/or the centre frequency of the second channel if overlaps have been determined.

## Revendications

1. Procédé de planification d'un réseau (402) d'automatisation ayant au moins un dispositif d'automatisation industriel, constitué et conçu pour la commande ou la régularisation d'installations industrielles, des composants de communication reliés par fil et/ou non reliés par fil ainsi qu'un premier et un deuxième réseaux de communication sans fil, le procédé comprenant les stades suivants :
- on détermine au moins une première plage (100 ; 102 ; 202) de fréquence d'au moins un premier canal du premier réseau de communication sans fil et au moins une deuxième plage (104 ; 106) de fréquence d'au moins un deuxième canal du deuxième réseau de communication sans fil, le premier canal et le deuxième canal ayant respectivement une fréquence médiane ;
- on détermine (S2) des chevauchements (108 ; 110 ; 112 ; 114) de la première plage de fréquence avec la deuxième plage de fréquence ;
- on décale (S3) la fréquence médiale du premier canal et/ou la fréquence médiane du deuxième canal, si des chevauchements ont été déterminés.

2. Procédé suivant la revendication 1, dans lequel le deuxième réseau de communication sans fil utilise un groupe (200) de deuxièmes canaux ayant des deuxièmes plages de fréquence pour la communication et dans lequel les deuxièmes plages de fréquence d'un sous-groupe (204) des deuxièmes canaux chevauchent au moins en partie la première plage de fréquence et dans lequel le sous-groupe des deuxièmes canaux n'est pas utilisé pour des transmissions de données dans le deuxième réseau de communication.

3. Procédé suivant l'une des revendications précédentes, dans lequel on mesure les plages de fréquence.

4. Procédé suivant l'une des revendications précédentes, dans lequel le premier réseau de communication sans fil a une première couverture de réseau et le deuxième réseau de communication sans fil a une deuxième couverture de réseau, les couvertures de réseau respectives étant simulées en tenant compte de l'environnement dans l'espace du réseau de communication respectif et la simulation des couvertures de réseau prenant en compte à la fois une première valeur comme mesure de la qualité d'un premier signal reçu par un terminal d'un noeud de réseau central et une deuxième valeur comme mesure de la qualité d'un deuxième signal reçu par un terminal par le noeud de réseau central.

5. Procédé suivant la revendication 4, dans lequel, pour la simulation de couverture du réseau, on compare la première valeur à la deuxième valeur et on utilise la valeur la plus petite pour la simulation de la couverture de réseau.

6. Procédé suivant l'une des revendications précédentes, dans lequel on utilise un programme (406) d'ordinateur de simulation pour la planification du réseau d'automatisation.

7. Procédé suivant la revendication 6, dans lequel le programme d'ordinateur de simulation s'exécute sur un ordinateur et l'ordinateur a un appareil de sortie d'informations visuelles, les informations visuelles comprenant les recouvrements de réseau dans l'espace et la hauteur de la valeur la plus petite étant représentée en un point (P.1 ; P.2 ; P.3 ; P.4) local par une ligne colorée entre le terminal en ce point local et le noeud de réseau central.

8. Procédé suivant la revendication 6, dans lequel le programme d'ordinateur de simulation est réalisé sur un ordinateur et l'ordinateur a un appareil (410) de sortie d'informations visuelles, les informations visuelles comprenant le recouvrement de réseau dans l'espace et la hauteur de la valeur la plus petite d'un point local est représentée par un pixel coloré.

9. Procédé suivant la revendication 6, dans lequel le programme d'ordinateur de simulation est réalisé sur un ordinateur et l'ordinateur a un appareil (410) de sortie d'informations visuelles, les informations visuelles comprenant les plages de fréquence et les plages de fréquence étant représentées de blocs dans un spectre de fréquence.

10. Ordinateur de planification dans un réseau d'automatisation, qui comprend un dispositif d'automatisation industriel, constitué et conçu pour la commande et pour la régularisation d'installations industrielles, des composants de communication reliés par fil et/ou non reliés par fil, ainsi qu'un premier et un deuxième réseaux de communication sans fil comprenant :
- des moyens de détermination (412) d'au moins une première plage de fréquence d'au moins un premier canal du premier réseau de communication sans fil et d'au moins une deuxième plage de fréquence d'au moins un deuxième canal du deuxième réseau de communication sans fil le premier canal et le deuxième canal ayant respectivement une fréquence médiane ;
- des moyens de détermination (408) de chevauchement de la première plage de fréquence avec la deuxième plage de fréquence ;
- des moyens de décalage (408) de la fréquence médiane du premier canal et/ou de la fréquence du deuxième canal si des chevauchements ont été déterminés.

11. Réseau (402) d'automatisation ayant au moins
- un premier et un deuxième réseaux de communication sans fil et un ordinateur selon la revendication 10 pour la planification d'un réseau d'automatisation.

12. Support (404) de mémoire pouvant être lu par un ordinateur et ayant des instructions (406) qui, lorsqu'elles sont exécutées dans un réseau d'automatisation qui comprend au moins un dispositif d'automatisation, des composants de communication reliés par fil et/ou non reliés par fil, ainsi qu'un premier et un deuxième réseaux de communication sans fil, font que le réseau d'automatisation exécute le procédé suivant :
- détermination d'au moins une première plage de fréquence d'au moins un premier canal du premier réseau de communication sans fil et d'au moins une deuxième plage de fréquence d'au moins un deuxième canal du deuxième réseau de communication sans fil, le premier canal et le deuxième canal ayant respectivement une fréquence médiane ;
- détermination de chevauchement de la première plage de fréquence avec la deuxième plage de fréquence ;
- décalage de la fréquence médiane du premier canal et/ou de la fréquence médiane du deuxième canal, si des chevauchements ont été déterminés.
